# EUROPEAN PATENT SPECIFICATION

(11) **EP 1 412 810 B1**
(45) Date of publication and mention of the grant of the patent: **25.10.2006**
(21) Application number: 02756733.8
(22) Date of filing: 26.07.2002
(51) Int. Cl.: G02F 1/1335

(54) **LIQUID CRYSTAL DISPLAY AND THE METHOD OF ITS FABRICATION**
FLÜSSIGKRISTALLANZEIGE UND ZUGEHÖRIGES HERSTELLUNGSVERFAHREN
AFFICHAGE A CRISTAUX LIQUIDES ET SON PROCEDE DE PRODUCTION

(30) Priority: 26.07.2001 RU 2001120831
(43) Date of publication of application: 28.04.2004
(73) Proprietor: NITTO DENKO CORPORATION, Ibaraki-shi, Osaka 567-8680 (JP)
(72) Inventor: LAZAREV, Pavel, Belmont, CA 94002 (US)
(74) Representative: Setna, Rohan P.
(86) International application number: PCT/US2002/023929
(87) International publication number: WO 2003/010594

(56) References cited:
- WO-A-97/39380

## Description

### Field of the invention

The invention pertains to devices for displaying information, in particular liquid crystal (LC) displays, and may be used in indicatory technology of various purposes.

### Background of the invention

There are known displays implemented in the form of a flat cuvette formed by two parallel glass plates, the inner sides of which feature electrodes, made of optically transparent conducting material, and orienting layers. After assembling the cuvette it is filled with liquid crystal, which forms a layer 5-20µm thick and acts as the active medium, changing its optical properties (the angle of rotation of the polarization plane) under the influence of an electric field. The change of optical properties is registered in the crossed polarizers, which are usually glued onto the outer surfaces of the cuvette. Therein, areas of the display where electrodes are not under the voltage will transmit light and look bright, whereas the areas under voltage will look dark [L.K.Vistin. JVHO, 1983, vol. XXVII, ed.2, pp.141-148].

The major drawbacks of the mentioned displays are the limited speed, low contrast of imaging and small observation angle, since the multilayer design of the LC-display is effectively governed by the flow of light propagating within the limited solid angle relative to normal to the surface of the display.

As polarizers in such displays one usually uses polarizers based on uniaxially stretched polymer film (for example, polyvinyl alcohol) dyed with iodine vapors or an organic dye [US 5007942]. Polarizing effectiveness of such films is determined by the concentration of iodine or other dye in the polymer film and the degree of orderliness of the polymer chains.

Such films possess the so-called positive dielectric anisotropy and positive dichroism. This means that the dipole moments of the optical transition of molecules responsible for absorption of light are oriented along the direction of stretching. Therein, the ellipses of angular dependence of the real and imaginary parts of the refraction index have elongated (needle-like) form. Polarizers obtained from the said films represent polarizers of the O-type, since they transmit the ordinary wave, while absorbing the extraordinary one.

Despite the high polarizing effectiveness of polarizers obtained from the said materials, they feature significant drawbacks, some of which are their light and thermal stability, the necessity to fabricate films of significant thickness in order to provide the high effectiveness. One of the major drawbacks is the fact that two cross oriented polarizers have significant transmission of light incident at an angle to the surface of the polarizer, especially in the directions azimuth of which is ±45° relative to the axis of polarization.

There is a known LC-display with internal polarizers [RU 2120651 and WO9739380]. As polarizers in this LC-display one uses thin crystalline films of molecularly ordered structure of organic compounds - dyes [US 5739296]. The flat molecules of dyes are grouped into aligned clusters - supramolecular complexes. The planes of molecules and the laying in them dipole moments of optical transition are oriented perpendicularly to the axis of macroscopic orientation of the obtained film. In order to create such structure, one uses the liquid crystal state of the dye, where molecules already posses local orderliness, while being in the one- or two-dimensional quasi-crystalline aggregates oriented relative to each other. When depositing such system onto the substrate and simultaneously applying external orienting influence, this film assumes macroscopic orientation, which in the process of drying the solution, not only remains intact, but may also enhance due to crystallization effect. The axis of polarization, then, is directed along the orienting influence, coinciding with the direction of deposition of the polarizer. In this case, ellipses of angular dependence of the real and the imaginary parts of the refraction index have disk-like shape.

These polarizers represent the E-type polarizers, since they transmit the extraordinary wave while absorbing the ordinary one. The said polarizers feature good angular characteristics, they are light- and thermally stable, they are applicable for forming structures of displays according to the thin-film technology, due to which they appear to be promising in the display technology.

Since in the recent time the main objective in fabrication is miniaturization of devices, the starting point task in fabricating the above displays is the issue of decreasing dimensions of the separate parts of the device as well as the concomitant functional elements, ensuring their functionality. The above polarizers and other anisotropic films based on them are widely utilized in portable displays of various purposes. One of the major challenges arising in fabrication of miniature displays is the decrease of size of their power supplies, which instigates decreasing power consumption and increasing effectiveness of using the governing electric field in the display. Losses of power are due to the low conductivity of the transparent electrodes as well as the voltage drop across the intermediate layers between electrodes and the layer of liquid crystal.

There are various known ways of increasing conductivity of the transparent electrodes, which are usually made of indium-tin oxides, featuring insufficient conductivity. Thus, they may be annealed at about 250°C [US 6198051]. It is also possible to create an auxiliary electrode structure, which is made of highly conductive materials, either on a part of the surface of the transparent electrodes in the form of solid lines or on the entire surface of electrodes in the form of cellular coating [US 6198051].

The technical result of the present invention is development of the design and method of fabrication of liquid crystal displays with inner polarizers, which features low power consumption, while maintaining high operational characteristics, thinness, manufacturability and simplicity of design.

Accordingly, the present invention provides a liquid crystal display comprising a layer of liquid crystal, placed between two plates, on each of which there is a network electrodes and at least one layer of polarizer, characterised in that electrodes on at least one of the plates are transparent, at least one of the polarizers is an inner polarizer, and at least one polarizer layer on the top of transparent electrodes relative to the plate is an E-type polarizer and made from at least partially crystalline anisotropic film of at least one organic dye, wherein the areas of at least one E-type polarizer above the transparent electrodes are modified to increase their conductivity via impregnation of ions.

As the organic material in the E-type polarizer one may use at least one organic material, chemical formula of which contains at least one ionogenic group, which provides its solubility in polar or non-polar solvents in order to form lytotropic liquid crystal phase, and at least one anti-ion. This may be any organic dye, which or derivatives of which are capable of forming stable lyotropic liquid crystal phase. These dyes are used in fabricating optically anisotropic films, including polarizing coatings [4]. Such dyes, for example, are indanthrone (Vat Blue 4), dibenzoimidazole 1,4,5,8-naphthalenetetracarboxilic acid (Vat Red 14), dibenzoimidazole 3,4,9,10-perylentetracarboxilic acid, quinacridone (Pigment Violet 19) and others, as well as their mixtures.

The said organic dyes are capable of absorbing in at least one of the following spectral ranges from 200 to 400nm, from 400 to 700nm and from 0.7 to 13µm.

Local areas of the E-type polarizer may be modified via its impregnation with atoms of at least one material providing increase of conductivity of the local areas of the polarizer. This material can be silver, and/or aluminum, and/or nickel and/or other conducting material.

The display may additionally contain at least one layer aligning the liquid crystal, and/or at least one diffuse reflecting layer, and/or at least one phase-shifting layer, and/or at least one birefringent layer, and/or at least one conducting layer, and/or at least one protective layer, and/or at least one isotropic and/or anisotropic layer, and/or at least one insulating layer, and/or at least one planarising layer, and/or diffuse or mirror reflecting layer, and/or at least one layer simultaneously functioning as at least two of the said layers.

The layer of the E-type polarizer may simultaneously serve as the phase-shifting layer, and/or birefringent layer, and/or the layer aligning the liquid crystal, and/or protective layer, and/or a layer simultaneously functioning as any combination of at least two of the said layers.

Each of the transparent electrodes may have metallic auxiliary structure, implemented on a part of electrode's surface to increase their conductivity.

It is preferred to choose optical thickness of layers in the display such that it would provide an interference maximum at the exit of the display.

The method of fabricating the above described liquid crystal display comprises fabricating the plates of the display with electrodes and polarizers, fastening the plates while forming a cavity for the liquid crystal via using spacers, filling the cavity with liquid crystal and sealing it, while the surface of the transparent electrodes fabricated on the inner surface of at least one of the plates is coated with at least one layer of E-type polarizer made of at least partially crystalline oriented film of an organic dye, after which the coating is impregnated with metal ions in the areas above the electrodes so as to increase conductivity of the film in those local areas.

Impregnation of metal ions into the local areas of the film may be performed electrochemically in solution of an electrolyte containing ions of the metal to be impregnated. The transparent electrodes, then, play the function of the cathode, while anode may be any electrode with catalytic coating, for example platinum. Concentration of solution and parameters of electrochemical processing are chosen such as to implant metal ions without decreasing degree of anisotropy of the polarizer. If aqueous solution of the electrolyte is used, the polarizer has to be converted into its water-insoluble form prior to being processed. For which purpose, the polarizer film is processed with solution of salts of two- and three-valence metals, for example barium chloride. The structure and optical parameters of the polarizer in this process are not altered.

To impregnate local areas of the polarizer film with atoms of a material, which would increase conductivity of these areas, one may use ionic implantation, controlling the concentration of implanted admixture by controlling the dose of implantation, and controlling the depth of penetration - by the energy and the type of implanting ions.

Ionic implantation may be performed in a reactor with an additional electrode, on which the work piece is mounted.

After forming the electrodes, the inter-electrode space is usually leveled by the planarizing layer of a dielectric.

Initially, the polarizing film of E-type is fabricated via deposition of liquid crystal solution of at least one organic dye with simultaneous and/or subsequent orienting influence and removal of the solvent.

Fabrication of the display according to the disclosed invention includes additional fabrication of at least one layer aligning the liquid crystal, and/or at least one diffuse reflective layer, and/or at least one phase-shifting layer, and/or at least one birefringent layer, and/or at least one conducting layer, and/or at least one protective layer, and/or at least one isotropic and/or anisotropic layer, and/or at least one insulating layer, and/or at least one planarizing layer, and/or one diffuse or mirror reflecting layer, and/or at least one layer simultaneously performing functions of at least two of the said layers.

### Brief description of the drawings

The invention will be more clearly understood from the following detailed description when read in conjunction with the accompanying drawings in which:
Figure 1 is a diagram of the display structure. The figure itemizes only those elements, which are, in one way or another, required for implementation of improvements introduced by the invention. Elements of the display, which are usually present in a regular liquid crystal display, but are not relevant to the present disclosure, are not shown in the figure for the sake of simplicity.
Figure 2 is a diagram of an electrochemical cell.

### Detailed description of the present invention

Liquid crystal display 1 comprises the layer of liquid crystal 2, placed in between the two plates 3, on each of which there are electrodes 4 and polarizers 5. Under the layer of the polarizer, in the inter-electrode space on the display's plate there are regions of the planarizing insulating layer 6. The particular quality of the display is the fact that at least one of the polarizers is the inner polarizer and is placed over the electrode system. The said polarizer is fabricated from an organic dye, and represents the E-type polarizer. To make this polarizer, liquid crystal solution of the appropriate organic dye (or a mixture of dyes) is deposited onto the underlying structure (plates with electrodes and planarizing layer).

The dye in the liquid crystal solution exists in a highly ordered state. Structural units of such liquid crystal solutions are the highly organized clusters of molecules - supramolecular complexes, where the flat molecules of the organic dye (or the flat parts of those molecules) form "stacks". Mechanical alignment of liquid crystal solution of a dichroic organic material on the surface of the substrate (structure) onsets orientation of the molecular clusters along the direction of the aligning action, such that the planes of molecules appear primarily perpendicular to the direction of alignment. This facilitates crystallization of the dye's molecules in the process of subsequent evaporation of the solvent from the LC layer. Therein, the structural units of the crystal lattice become the individual molecules of the dye and not the linear clusters, which "disappear" during crystallization. As a result, the crystal lattice is porous, for penetration by the metal ions.

The degree of perfection of the crystal structure in the film can be tailored by controlling fabrication conditions and the rate of extraction of the solvent during drying. The described fabrication process is used to create optically anisotropic films. Impregnation of metal ions into these films allows increasing their conductivity without destroying crystal lattice and the degree of anisotropy. Moreover, impregnating the layer of the internal polarizer with atoms of conducting elements in the local areas 7 situated above the electrodes, allows significantly decreasing the voltage drop across the polarizer in an operating display. Creating these local modified regions allows decreasing voltage drop down to 0.1 V across polarizers that are 1µm thick.

Furthermore, the said regions may be obtained via various existing methods. The main requirement to the implantation process is that the film should remain optically anisotropic and maintain its purpose - it should remain a polarizer.

Creating local modified regions is possible by using a lithographic mask, which is usually used for local processing of thin films. However, specifics of the polarizing films allow creating local modified areas with increased conductivity even with a maskless process. Thus, by investigating the structure of optically anisotropic films obtained from liquid crystal solutions of organic dyes, we have established that it has a certain degree of porosity, which allows performing electrochemical processes directly through the thickness of the film, utilizing the underlying electrode structure as one of electrodes in the electrochemical cell. The other electrode could be any chemically inert electrode, which would not contaminate the structure of the display. Electrochemical processing may make use of any existing electrolytes, including aqueous ones, which contain ions of the desirable materials. However, since it is important to preserve the structure of the film, solutions of electrolytes should be of low concentration and contain organic additives such as glycerin and others, allowing to weaken the electrolyte. Electrolytes with pH on the order of 8 are usually used. Besides that, the rate of electrochemical implantation should be rather slow, since a fast-rate electrolysis may help destroying the structure of the polarizer and lower its degree of anisotropy.

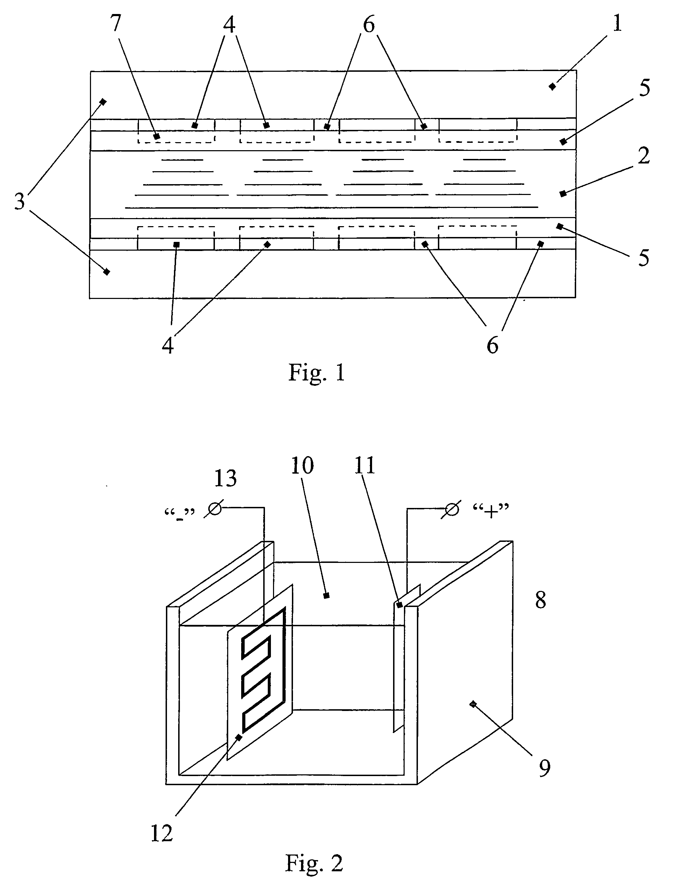

Figure 2 schematically illustrates electrochemical cell 8, where the cuvette 9 contains electrolyte 10, anode 11 and the work piece 12 (the plate of the display) with electrodes, which are connected to the circuitry of the cell and function as the cathode 13 and the layer of polarizer above the electrodes.

Besides that, the regions with increased conductivity in the film may be obtained via irradiation of the structure (the plate of the display with electrodes and the polarizer) with ions of the metal - Ni, Co, Cr, Pt, Mo, Ag and others. The thickness of the modified regions is controlled by the implanted ion dose, wavelength of radiation, duration and energy density of the heating impulse used for the subsequent thermal processing. Conditions of the process are controlled so as to avoid damaging the structure of the polarizer film and eliminate the influence of processing conditions on the degree of anisotropy of the film. Ion implantation can be performed in various configurations: with protective masks, templates. The plate may be placed on an additional electrode in the reactor, while supplying the required potential to that electrode. In this case that electrode is connected with the electrode network of the plate, which significantly accelerates implantation process allowing to achieve desired results with significantly lower process parameters.

As an example of embodiment consider the method of fabricating liquid crystal display of reflecting type with internal polarizers obtained from liquid crystal solution of organic dye - sulfonated indanthrone. The front panel of the display is fabricated on a glass plate by forming the network of indium-tin oxide electrodes via employing the regular methods of purifying and photolithography. After that, the inter-electrode spaces are planarized with silicon dioxide layer. The planarizing layer leaves electrodes exposed. Next, the obtained structure is covered with crystalline film of the polarizer with the method described above. Prior to electrochemical processing of the film, it is converted into the water-insoluble form, for example via processing it with solution containing ions of two- or three-valence metals. Then the structure is placed into solution of a weak electrolyte usually used for silvering. Concentration of silver ions in solution is usually chosen between 0.1 - 0.001 moles/liter. One may also use additives like glycerin, ethylenglycol or ethylenediamintetracetic acid. Electrodes on the plate are then connected to the cathode of the electrolysis cell. Another electrode with catalytic platinum coating is used as the anode. The process starts when voltage is applied to the electrodes, and it continues until the local modified regions with high conductivity in the polarizer film are obtained. Usually, the process of impregnation is performed in galvanostatic regime with current density below 0.01mA/cm². However, it is also possible to use voltostatic or mixed regimes, as well as impulse regimes of electrochemical process. Finished plates are assembled to form the cavity. Liquid crystal is injected in between the plates, and the display is sealed. Measurements have showed that creating local regions with high conductivity in the film of the polarizer in the areas above the electrodes leads to significant decrease of energy consumption by the display, which allows significantly decrease its overall thickness.

### References

1.L.K.Vistin. JVHO, 1983, vol. XXVII, ed.2, pp.141-148.
2.US 5007942, 1991.
3.RU 2120651, 1998.
4.US 5739296, 1998.
5.US 6198051, 2001.

## Claims

1. A liquid crystal display (1) comprising a layer of liquid crystal (2), placed between two plates (3), on each of which plates there is a network of electrodes (4) and at least one layer of a polarizer (5), the electrodes (4) on at least one of the plates (3) being transparent, at least one of the polarizers (5) being an inner polarizer; and the at least one inner polarizer being on the top the transparent electrodes (4) relative to the plate (3) and being an E-type polarizer and made from at least partially crystalline anisotropic film of at least one organic dye, **characterized in that** the areas of the at least one E-type polarizer above the transparent electrodes (4) are modified via impregnation of ions to increase their conductivity.

2. Display according to claim 1, wherein the E-type polarizer has been fabricated using at least one organic material, chemical formula of which contains at least one ionogenic group, which provides its solubility in polar solvents in order to form lyotropic liquid crystal phase and at least one anti-ion.

3. Display according to any of the claims 1 or 2, wherein in the capacity of the organic material one uses at least one organic dye capable of absorbing in at least one of the following spectral ranges: from 200 to 400 nm, from 400 to 700nm, from 0.7 to 13µm.

4. Display according to any of the foregoing claims, wherein the local areas of the E-type polarizer are modified via impregnation of ions of at least one material, which would provide an increase of conductivity of those local areas.

5. Display according to claim 4, wherein in the capacity of the material that increases conductivity of local areas of the polarizer one uses silver, and/or aluminum, and/or nickel, and/or other metal.

6. Display according to any of the claims 1, 2, 3, 4 or 5, wherein it additionally comprises at least one layer aligning the liquid crystal, and/or at least one diffuse-reflecting layer, and/or at least one phase-shifting layer, and/or at least one birefringent layer, and/or at least one conducting layer, and/or at least one protective layer, and/or at least one isotropic layer, and/or at least one insulating layer, and/or at least one planarizing layer, and/or one diffuse- or mirror-reflecting layer, and/or at least one layer simultaneously functioning as at least two of the said layers.

7. Display according to any of the foregoing claims, wherein the layer of the E-type polarizer simultaneously functions as the phase-shifting layer, and/or birefringent layer, and/or layer that aligns the liquid crystal, and/or protective layer, and/or a layer simultaneously functioning as any combination of at least two of the said layers.

8. Display according to any of the claims 1-7, wherein each of the transparent electrodes has auxiliary metallic structure, implemented on a part of the surface of electrodes to increase their conductivity.

9. Display according to any of the claims 1-8, wherein optical thickness of layers in the display is chosen such as to provide interference extremum on at least one side of the display.

10. Method of fabricating liquid crystal display according to claim 1, which includes fabricating the plates of the display with electrodes and polarizers, joining the plates while forming a cavity for the liquid crystal via using spacers, filling the cavity with liquid crystal and sealing it, wherein on the surface of the transparent electrodes formed on the inner surface of at least one of the plates of the display, one forms at least one layer of E-type polarizer made out of at least partially crystalline optically anisotropic film of at least one organic dye, after which the local areas of the crystalline film above the electrodes are impregnated with ions of metals in the amount sufficient to increase conductivity of the film in those local areas.

11. Method according to claim 10, wherein impregnation of metal ions into the local areas of the polarizer film is performed via electrochemical processing of the display plate, with already applied transparent electrodes and polarizer film, in solution of an electrolyte containing ions of the implanting metal, where the transparent electrodes on the plate are used as the cathode, while as the anode - one uses electrode with catalytic, for example, platinum coating.

12. Method according to claims 10 or 11, wherein concentration of the solution of electrolyte and parameters of the electrochemical processing are chosen such as to perform implantation of metal atoms into the polarizer film without decreasing its degree of anisotropy.

13. Method according to claims 10 or 11, wherein in case of using aqueous solution of the electrolyte, before performing the electrochemical processing the polarizer film is processed to convert the material of the polarizer film into the water insoluble form.

14. Method according to claim 10, wherein impregnation of local areas of polarizer film is performed via ionic implantation, controlling the concentration of the implanting admixture by the dose of implantation, and the depth of penetration - by the energy and type of the implanting ions.

15. Method according to claim 14, wherein ionic impregnation is performed in the reactor with an additional electrode, on which the processing structure is mounted.

16. Method according to any of the foregoing claims 10, 11, 12, 13, 14 or 15, wherein after fabricating the electrodes, the inter-electrode space is coated with a layer of dielectric such as to planarize the electrode structure.

17. Method according to any of the foregoing claims 10, 11, 12, 13, 14, 15 or 16, wherein the crystalline film of the E-type polarizer is formed via depositing liquid crystal solution of at least one organic dye with simultaneous and/or subsequent orienting influence, and removal of the solvent.

18. Method according to any of the foregoing claims 10, 11, 12, 13, 14, 15, 16 or 17, wherein it additionally comprises formation of at least one layer aligning the liquid crystal, and/or at least one disuse-reflecting layer, and/or at least one phase-shifting layer, and/or at least one birefringent layer, and/or at least one conducting layer, and/or at least one protective layer, and/or at least one isotropic and/or anisotropic layer, and/or at least one insulating layer, and/or at least one planarizing layer, and/or one diffuse or mirror-reflecting layer, and/or at least one layer simultaneously functioning as at least two of the said layers.

## Patentansprüche

1. Ein Flüssigkristalldisplay (1), aufweisend eine Schicht aus Flüssigkristall (2), angebracht zwischen zwei Platten (3), wobei sich auf jeder der Platten ein Netzwerk aus Elektroden (4) befindet, und zumindest einer Schicht aus einem Polarisator (5), wobei die Elektroden (4) auf zumindest einer der Platten (3) transparent sind, zumindest einer der Polarisatoren (5) ein Innenpolarisator ist und der zumindest eine innere Polarisator sich oben auf den transparenten Elektroden (4) relativ zu der Platte (3) befindet und ein Polarisator vom E-Typ ist, und hergestellt wird aus zumindest teilweise kristallinem, anisotropem Film aus zumindest einem organischen Farbstoff, **dadurch gekennzeichnet, dass** die Bereiche des zumindest einen Polarisators vom E-Typ oberhalb der transparenten Elektroden (4) durch Imprägnierung mit Ionen modifiziert werden, um ihre Leitfähigkeit zu erhöhen.

2. Display gemäß Anspruch 1, wobei der Polarisator vom E-Typ hergestellt wird unter Verwendung von zumindest einem organischen Material, dessen chemische Formel zumindest eine ionogene Gruppe enthält, welche die Löslichkeit in polaren Lösungsmitteln zur Verfügung stellt, um eine lyotrope Flüssigkristallphase zu bilden, sowie zumindest ein Gegen-Ion.

3. Display gemäß einem der Ansprüche 1 oder 2, wobei man für die Funktion des organischen Materials zumindest einen organischen Farbstoff verwendet, der dazu fähig ist, in zumindest einem der folgenden Spektralbereiche zu absorbieren: von 200 bis 400 nm, von 400 bis 700 nm, von 0,7 bis 13 µm.

4. Display gemäß einem der vorhergehenden Ansprüche, wobei die lokalen Bereiche des Polarisators vom E-Typ durch Imprägnierung von Ionen von zumindest einem Material modifiziert werden, was eine Erhöhung der Leitfähigkeit von diesen lokalen Bereichen zur Verfügung stellt.

5. Display gemäß Anspruch 4, wobei man für die Funktion des Materials, welches die Leitfähigkeit von lokalen Bereichen des Polarisators erhöht, Silber und/oder Aluminium und/oder Nickel und/oder ein anderes Metall verwendet.

6. Display gemäß einem der Ansprüche 1, 2, 3, 4 oder 5, wobei es zusätzlich zumindest eine Schicht, welche den Flüssigkristall ausrichtet, und/oder zumindest eine Diffusions-Reflektionsschicht und/oder zumindest eine Phasenverschiebungsschicht und/oder zumindest eine doppelbrechende Schicht und/oder zumindest eine Leitfähigkeitsschicht und/oder zumindest eine Schutzschicht und/oder zumindest eine isotrope Schicht und/oder zumindest eine Isolationsschicht und/oder zumindest eine planarisierende Schicht und/oder eine Diffusions- oder Spiegelreflektionsschicht und/oder zumindest eine Schicht, die gleichzeitig als zumindest zwei der genannten Schichten wirkt, aufweist.

7. Display gemäß einem der vorhergehenden Ansprüche, wobei die Schicht des Polarisators vom E-Typ gleichzeitig als die Phasenverschiebungsschicht und/oder doppelbrechende Schicht und/oder die Schicht, welche den Flüssigkristall ausrichtet und/oder Schutzschicht und/oder gleichzeitig als eine Schicht wirkt, die als eine Kombination von zumindest zwei dieser genannten Schichten funktioniert.

8. Display gemäß einem der Ansprüche 1 - 7, wobei jede der transparenten Elektroden hilfsweise eine metallische Struktur hat, die auf einem Teil der Oberfläche von Elektroden implementiert sind, um ihre Leitfähigkeit zu erhöhen.

9. Display gemäß einem der Ansprüche 1 - 8, wobei die optische Dicke der Schichten in dem Display so ausgewählt wird, dass auf zumindest einer Seite des Displays ein Interferenz-Extremwert zur Verfügung gestellt wird.

10. Verfahren zur Herstellung eines Flüssigkristalldisplays gemäß Anspruch 1, welches das Herstellen der Platten des Displays mit Elektroden und Polarisatoren beinhaltet, Zusammenfügen der Platten, wobei eine Höhle für den Flüssigkristall durch Verwendung von Spacern gebildet wird, Füllen der Höhle mit Flüssigkristall und Versiegeln derselben, wobei auf der Oberfläche der transparenten Elektroden, die auf der inneren Oberfläche von zumindest einer der Platten des Displays gebildet wurden, man zumindest eine Schicht des Polarisators vom E-Typ bildet, hergestellt aus zumindest teilweise kristallinem, optisch anisotropem Film aus zumindest einem organischen Farbstoff, wonach die lokalen Bereiche des kristallinen Films oberhalb der Elektroden mit Ionen aus Metallen imprägniert werden, in einer Menge die ausreicht, um die Leitfähigkeit des Films in diesen lokalen Bereichen zu erhöhen.

11. Verfahren gemäß Anspruch 10, wobei das Imprägnieren von Metallionen in die lokalen Bereiche des Polarisatorfilms ausgeführt wird durch elektrochemisches Bearbeiten der Displayplatte mit bereits darauf aufgebrachten transparenten Elektroden und Polarisatorfilm in einer Elektrolytlösung, welche Ionen des Implantationsmetalls enthält, wobei die transparenten Elektroden auf der Platte als die Kathoden verwendet werden, während man als Anode Elektroden mit katalytischer, z. B. Platinbeschichtung, verwendet.

12. Verfahren gemäß den Ansprüchen 10 oder 11, wobei die Konzentration der Lösung des Elektrolyten und Parameter der elektrochemischen Bearbeitung so ausgewählt werden, dass die Implantation von Metallatomen in den Polarisatorfilm ohne Rückgang seines Anisotropiegrades ausgeführt werden kann.

13. Verfahren gemäß den Ansprüchen 10 oder 11, wobei in dem Fall der Verwendung von wässriger Lösung des Elektrolyten vor dem Ausführen der elektrochemischen Bearbeitung der Polarisatorfilm bearbeitet wird, um das Material des Polarisatorfilms in die wasser-unlösliche Form zu überführen.

14. Verfahren gemäß Anspruch 10, wobei das Imprägnieren von lokalen Bereichen des Polarisatorfilms durch Ionenimplantation ausgeführt wird, die Konzentration der Implantationsmischung durch die Implantationsdosis und die Tiefe des Eindringens durch die Energie und die Art der Implantationsionen kontrolliert wird.

15. Verfahren gemäß Anspruch 14, wobei das ionische Imprägnieren in dem Reaktor mit einer zusätzlichen Elektrode, auf welcher die Verarbeitungsstruktur angebracht ist, ausgeführt wird.

16. Verfahren gemäß einem der vorhergehenden Ansprüche 10, 11, 12, 13, 14 oder 15, wobei nach der Herstellung der Elektroden der Zwischenraum zwischen den Elektroden mit einer Schicht aus Dielektrikum beschichtet wird, um die Elektrodenstruktur einzuebnen.

17. Verfahren gemäß einem der vorhergehenden Ansprüche 10, 11, 12, 13, 14, 15 oder 16, wobei der kristalline Film des Polarisators vom E-Typ durch Ablagerung einer Flüssigkristalllösung aus zumindest einem organischen Farbstoff mit gleichzeitigem und/oder nachfolgendem Orientierungseinfluss und Entfernung des Lösungsmittels gebildet wird.

18. Verfahren gemäß einem der vorhergehenden Ansprüche 10, 11, 12, 13, 14, 15, 16 oder 17, wobei es zusätzlich die Bildung von zumindest einer Schicht aufweist, welche den Flüssigkristall ausrichtet, und/oder zumindest eine Diffusions-Reflektionsschicht und/oder zumindest eine Phasenverschiebungsschicht und/oder zumindest eine doppelbrechende Schicht und/oder zumindest eine leitfähige Schicht und/oder zumindest eine Schutzschicht und/oder zumindest eine isotrope und/oder anisotrope Schicht und/oder zumindest eine Isolationsschicht und/oder zumindest eine planarisierende Schicht und/oder eine Diffusions- oder Spiegelreflektionsschicht und/oder zumindest eine Schicht, die gleichzeitig als zumindest zwei der genannten Schichten wirkt.

## Revendications

1. Affichage à cristaux liquides (1) comprenant une couche de cristal liquide (2), placée entre deux plaques (3), sur chacune desquelles plaques se trouve un réseau d'électrodes (4) et au moins une couche d'un polariseur (5), les électrodes (4) sur au moins l'une des plaques (3) étant transparentes, au moins l'un des polariseurs (5) étant un polariseur interne ; et l'au moins un polariseur interne se trouvant au-dessus des électrodes transparentes (4) par rapport à la plaque (3) et étant un polariseur de type E et constitué d'au moins un film anisotrope partiellement cristallin d'au moins un colorant organique, **caractérisé en ce que** les zones de l'au moins un polariseur de type E au-dessus des électrodes transparentes (4) sont modifiées via l'imprégnation d'ions pour accroître leur conductivité.

2. Affichage selon la revendication 1, dans lequel le polariseur de type E a été fabriqué en utilisant au moins une matière organique, dont la formule chimique contient au moins un groupe ionogène, qui assure sa solubilité dans les solvants polaires afin de former une phase de cristal liquide lyotrope et au moins un anti-ion.

3. Affichage selon l'une quelconque des revendications 1 ou 2, dans lequel dans la capacité de la matière organique, on utilise au moins un colorant organique capable d'absorber dans au moins l'une des plages spectrales suivantes : de 200 à 400 nm, de 400 à 700 nm, de 0, 7 à 13 µm.

4. Affichage selon l'une quelconque des revendications précédentes, dans lequel les zones locales du polariseur de type E sont modifiées via l'imprégnation d'ions d'au moins une matière, ce qui assurerait une augmentation de la conductivité de ces zones locales.

5. Affichage selon la revendication 4, dans lequel, dans la capacité de la matière qui augmente la conductivité des zones locales du polariseur, on utilise l'argent et/ou l'aluminium et/ou le nickel et/ou un autre métal.

6. Affichage selon l'une quelconque des revendications 1, 2, 3, 4 ou 5, comprenant en outre au moins une couche alignant le cristal liquide et/ou au moins une couche à réflexion diffuse, et/ou au moins une couche à décalage de phase, et/ou au moins une couche biréfringente, et/ou au moins une couche conductrice, et/ou au moins une couche de protection, et/ou au moins une couche isotrope, et/ou au moins une couche isolante, et/ou au moins une couche de planarisation, et/ou une couche à réflexion diffuse ou spéculaire, et/ou au moins une couche fonctionnant simultanément comme au moins deux desdites couches.

7. Affichage selon l'une quelconque des revendications précédentes, dans lequel la couche du polariseur de type E fonctionne simultanément comme la couche à décalage de phase, et/ou la couche biréfringente et/ou la couche qui aligne le cristal liquide, et/ou la couche de protection, et/ou une couche fonctionnant simultanément comme toute combinaison d'au moins deux desdites couches.

8. Affichage selon l'une quelconque des revendications 1 à 7, dans lequel chacune des électrodes transparentes a une structure métallique auxiliaire, mise en oeuvre sur une partie de la surface des électrodes pour accroître leur conductivité.

9. Affichage selon l'une quelconque des revendications 1 à 8, dans lequel l'épaisseur optique des couches de l'affichage est choisie de sorte à assurer un extrémum d'interférence sur au moins un côté de l'affichage.

10. Procédé de fabrication d'un affichage à cristaux liquides selon la revendication 1, qui comprend la fabrication des plaques de l'affichage avec électrodes et polariseurs, l'assemblage des plaques tout en formant une cavité pour le cristal liquide via l'utilisation d'espaceurs, le remplissage de la cavité avec le cristal liquide et le scellage de celle-ci, dans lequel sur la surface des électrodes transparentes formées sur la surface interne d'au moins l'une des plaques de l'affichage, on forme au moins une couche de polariseur de type E réalisée à partir d'un film optiquement anisotrope au moins partiellement cristallin d'au moins un colorant organique, après quoi les zones locales du film cristallin au-dessus des électrodes sont imprégnées avec des ions de métaux en quantité suffisante pour augmenter la conductivité du film dans ces zones locales.

11. Procédé selon la revendication 10, dans lequel l'imprégnation d'ions métalliques dans les zones locales du film polariseur est effectuée via le traitement électrochimique de la plaque d'affichage, avec les électrodes transparentes et le film polariseur déjà appliqués, dans une solution d'un électrolyte contenant des ions du métal d'implantation, où les électrodes transparentes sur la plaque sont utilisées comme cathode, alors que comme anode, on utilise l'électrode avec un revêtement catalytique, par exemple, de platine.

12. Procédé selon les revendications 10 ou 11, dans lequel la concentration de la solution d'électrolyte et les paramètres du traitement électrochimique sont choisis de sorte à effectuer l'implantation d'atomes de métal dans le film polariseur sans réduire son degré d'anisotropie.

13. Procédé selon les revendications 10 ou 11, dans lequel en cas d'utilisation d'une solution aqueuse de l'électrolyte, avant d'effectuer le traitement électrochimique, le film polariseur est traité pour convertir le matériau du film polariseur en la forme insoluble dans l'eau.

14. Procédé selon la revendication 10, dans lequel l'imprégnation de zones locales du film polariseur est effectuée via l'implantation ionique, le contrôle de la concentration du mélange d'implantation par la dose d'implantation, et la profondeur de pénétration - par l'énergie et le type des ions d'implantation.

15. Procédé selon la revendication 14, dans lequel l'imprégnation ionique est effectuée dans le réacteur avec une électrode supplémentaire, sur laquelle est montée la structure de traitement.

16. Procédé selon l'une quelconque des revendications 10, 11, 12, 13, 14 ou 15 précédentes, dans lequel, après fabrication des électrodes, l'espace inter-électrodes est revêtu d'une couche de diélectrique de sorte à planariser la structure d'électrode.

17. Procédé selon l'une quelconque des revendications 10, 11, 12, 13, 14, 15 ou 16 précédentes, dans lequel le film cristallin du polariseur de type E est formé via le dépôt d'une solution de cristal liquide d'au moins un colorant organique avec une influence d'orientation simultanée et/ou suivante, et l'élimination du solvant.

18. Procédé selon l'une quelconque des revendications 10, 11, 12, 13, 14, 15, 16 ou 17 précédentes, comprenant en outre la formation d'au moins une couche alignant le cristal liquide, et/ou au moins une couche à réflexion diffuse, et/ou au moins une couche à décalage de phase, et/ou au moins une couche biréfringente, et/ou au moins une couche conductrice, et/ou au moins une couche de protection, et/ou au moins une couche isotrope et/ou anisotrope, et/ou au moins une couche d'isolation, et/ou au moins une couche de planarisation, et/ou une couche à réflexion diffuse ou spéculaire, et/ou au moins une couche fonctionnant simultanément comme au moins deux desdites couches.
